# EUROPEAN PATENT SPECIFICATION

(11) **EP 1 360 895 B1**
(45) Date of publication and mention of the grant of the patent: **30.11.2005**
(21) Application number: 03077508.4
(22) Date of filing: 21.03.2001
(51) Int. Cl.: A01K 5/02, A01K 15/02, G01G 21/23, G01G 13/22, G01G 19/14

(54) **A feed metering device**
Fütterdosierungsvorrichtung
Dispositif de dosage d'alimentation

(30) Priority: 10.04.2000 NL 1014895
(43) Date of publication of application: 12.11.2003
(62) Divisional of application: 01201046.8
(73) Proprietor: Lely Enterprises AG, 6300 ZUG (CH)
(72) Inventor: van den Berg, Karel, 2971 BR Bleskensgraaf (NL)
(74) Representative: Corten, Maurice Jean F.M.

(56) References cited:
- EP-A- 0 610 171
- WO-A-00/38506
- WO-A-95/23503
- WO-A-96/05723
- NL-C- 1 002 399

## Description

The present invention relates to a feed metering device for distributing fodder and/or drink in metered portions to an animal according to the preamble of claim 1.

Such feed metering devices, e.g. for cows, is known from WO 96/05723. However, a disadvantage of this known feed metering device is that checking whether fodder and/or drink remains in the feed unit after an animal has visited same can only take place in a very cumbersome manner. Such a determination of the remnants may inter alia be an indication of the health condition of the animal; for, when an animal unexpectedly takes a smaller amount of fodder and/or drink, this may be a signal that the animal is ill. Moreover, it is undesirable that, when an animal leaves a certain amount of fodder and/or drink, the amount of fodder and/or drink for the next animal is supplied to the feed unit without these remnants being taken into account.

Therefore, it is one of the objectives of the present invention to provide a feed metering device for distributing fodder and/or drink in metered portions to an animal, by means of which the amount of fodder and/or drink in the feed unit can be determined in a simple but reliable manner.

For that purpose, in accordance with the invention, a feed metering device of the above-described type comprises the characterizing features of claim 1. The magnitude of the torque generated by the movement of the feed unit depends on the amount of fodder and/or drink in the feed unit. In this situation, the exact correlation between torque and amount of fodder and/or drink can previously be determined by means of simple calibration tests.

A compact feed metering device is obtained when the motor for moving the feed unit and the device for measuring the magnitude of the torque during movement and for deducing, from the magnitude of the torque measured, the weight of the fodder and/or drink present in the feed unit, are integrated in the animal identification device.

A mechanically simple but accurate construction is obtained when the motor for moving the feed unit drives a torque roll, said torque roll being in contact with the feed unit.

Since the feed metering device is provided with means for weighing the fodder and/or drink present in the feed unit, the feed unit being pivotably and/or rotatably fastened to the feed metering device for the purpose of co-operating with the weighing means, it is possible to determine how much fodder and/or drink is consumed by a particular animal. On the basis thereof the amount of fodder and/or drink consumed by an animal can be determined in the course of time and accordingly the health condition of an animal can be deduced.

The feed metering device can further be provided with an animal identification device for recognizing a particular animal that visits the feed unit. In this situation by an animal that visits the feed unit is meant an animal that is in a position in which it is actually able to take fodder and/or drink. Thus it is possible for the feed supplying device to supply an amount of feed to the feed unit with the aid of data from the animal identification device.

The means for weighing the fodder and/or drink present in the feed unit are preferably connected to the feed supplying unit for supplying an amount of fodder and/or drink to the feed unit with the aid of data both from the animal identification device and the weighing means.

The means for weighing the fodder and/or drink present in the feed unit may comprise a feed unit which is pivotable about a hinge pin, the degree of pivotability being determined by the weight of the fodder and/or drink present in the feed unit, and a device for determining the degree of pivotability of the feed unit and for deducing, from the degree as determined, the weight of the fodder and/or drink present in the feed unit. The degree of pivotability of the feed unit depends on the amount of fodder and/or drink in the feed unit. The more fodder and/or drink, the higher the degree of pivotability. The exact correlation between the degree of pivotability and the amount of fodder and/or drink can previously be determined by means of simple calibration tests.

A compact construction of the feed metering device is obtained when the device for determining the degree of pivotability of the feed unit and for deducing, from the degree as determined, the weight of the fodder and/or drink present in the feed unit, is integrated in the animal identification device.

When the device for determining the degree of pivotability of the feed unit and for deducing, from the degree as determined, the weight of the fodder and/or drink present in the feed unit comprises a measuring roll which is in contact with the feed unit, it is possible to determine from the degree of rotation of the roll the degree of pivotability and thus the amount of fodder and/or drink in the feed unit.

Alternatively but not according to the invention, the device for determining the degree of pivotability of the feed unit and for deducing, from the degree as determined, the weight of the fodder and/or drink present in the feed unit, comprises a load sensor, the feed unit bearing on the load sensor. The load sensor is preferably included in the animal identification device.

In order to be able to measure even a small difference in weight, the hinge pin and the measuring roll are located at a small distance from each other.

In order to prevent for example and not according to the invention the load sensor from being damaged in the undesired event of a defect, there is provided a safety supporting bracket for the feed unit.

The invention will be explained hereinafter in further detail with reference, by way of example, to the drawing in which:
Figure 1 is a first embodiment of a feed metering device according to the invention;
Figure 2 is a second embodiment of a feed metering device according to the invention, and
Figure 3 is a third embodiment of a feed metering device according to the invention.

It is to be noted that the deterring means are not a part of the invention.

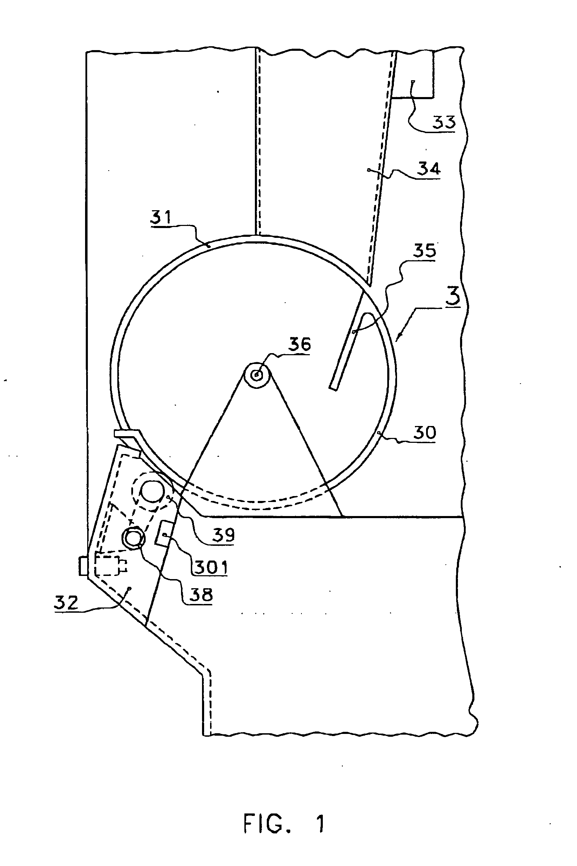

In the first embodiment of a feed metering device according to the invention, for distributing fodder and/or drink (for the sake of simplicity hereinafter to be denoted by feed, although it will be clear that fodder and/or drink is meant), as shown schematically in Figure 1, the means for weighing the feed present in the feed unit comprise a movable feed unit 30. The feed unit 30 is moved in a reciprocating manner by the motor 38 by which the roll 39 is driven. As a result of this movement there occurs a torque whose magnitude is determined by a device 301 for measuring the magnitude of the torque. The device 301 deduces the weight of the feed present in the feed unit from the torque determined. The exact correlation between torque and amount of feed can previously be determined by means of simple calibration tests.

The embodiment according to Figure 1 has a compact construction due to the fact that the motor 38 for moving the feed unit 30 and the device 301 for measuring the magnitude of the torque during movement and for deducing, from the magnitude of the torque measured, the weight of the feed present in the feed unit 30, are integrated in the animal identification device 32.

The feed metering device may be provided with means for deterring an animal that wishes to use the feed unit at an undesired point of time with the aid of data from the animal identification device. This makes it possible to deter animals that are not eligible for being fed, in a simple, efficient and cheap way, from putting their heads into the feed unit.

In the first embodiment shown in Figure 1 the means for deterring an animal include a closing means that is movable across the entrance opening 31, which closing means is constituted by the feed unit 30 itself, which is designed as a movable one. In the embodiment shown the feed unit 30 is rotatably disposed about an axis 36, which axis 36 may be constituted by an axis that is driven by a motor, said motor being controlled by the animal identification device.

In order to prevent that, in the position in which the feed unit 30 closes the entrance opening 31, feed falls from the feed unit 30, the feed unit 30 comprises a wall portion 35 for catching remaining feed. Said wall portion 35 can also act as a feed guide means for feed that is supplied to the feed unit 30 via the chute 34 of the feed supplying device 33.

In order to prevent fodder and/or drink from falling from the feed unit 30 in the position in which the feed unit 30 closes the entrance opening 31, the feed unit 30 comprises a wall portion 35 for catching remaining feed. Said wall portion 35 can also act as a feed guide means for feed that is supplied via the chute 34 of the feed supplying device 33 to the feed unit 30.

As described, in the first embodiment there is provided a simple but reliable construction due to the fact that the closing means rotates about an axis, the closing means being driven by a motor which is controlled by the animal identification device. For the purpose of providing, besides a simple but reliable construction, also a compact construction, a roll 39 is preferably driven by a motor 38, which roll 39 contacts the closing means 30. In the first embodiment the feed unit 30 thus bears on the animal identification device 32 via the roll 39.

An extremely compact construction is obtained when the motor 38 and the roll 39 are included in the relevant animal identification devices 32.

Although for the roll 39 there may be used a separate torque roll, the roll 39 preferably functions as a drive of the closing means, in this situation constituted by the feed unit 30 itself, as well as a torque roll respectively a measuring roll. In the alternative case in which the feed unit 30 is moved by the axis 36 which is driven by a motor, the torque can also be measured, of course, via said motor.

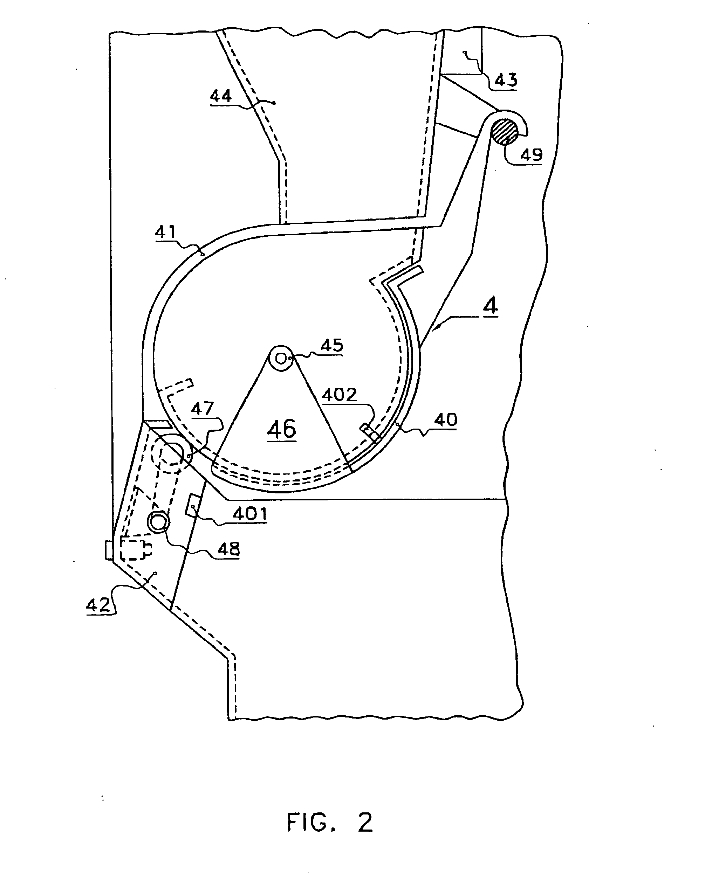

The second embodiment of a feed metering device 4 according to the present embodiment, as shown in Figure 2, comprises means for deterring an animal that wishes to use the feed unit 40, with the aid of data from the animal identification device 42, as well as means for weighing the feed present in the feed unit 40.

The deterring means are constituted by a separate closing means 46 which is rotatable about an axis 45. The closing means 46 is set in rotation by a roll 47 which can come into contact with the closing means 46. The roll 47 is driven by a motor 48 which is controlled by the animal identification device 42.

In this embodiment the weighing means are constituted by a feed unit 40 which is rotatable about an axis 49. The feed unit 40 can be brought into contact with the roll 47, and is subjected to a reciprocating motion by correctly controlling the motor 48 that drives the roll 47. By the movement of the feed unit 40 there is generated a torque that can be measured by the torque measuring device 401.

In the situation shown in Figure 2, the roll 47 makes contact with the feed unit 40 and the latter can be set in motion for determining the amount of feed present in the feed unit 40. After an animal has consumed the feed, the amount of remaining feed can be determined by torque measurement. Then the roll 47 is controlled by the motor 48 in such a manner that it will be partially located across the entrance opening 41. A catching element 402 on the feed unit 40 takes the closing means 46 along until the latter comes into contact with the roll 47. Then the roll 47 controls the closing means 46 in such a manner that the latter covers the entire entrance opening 41. As a result of the fact that the feed unit 40 is no longer in contact with the roll 47, the feed unit 40 falls back to the starting position in which feed can possibly be added by the feed supplying device 43 via the chute 44.

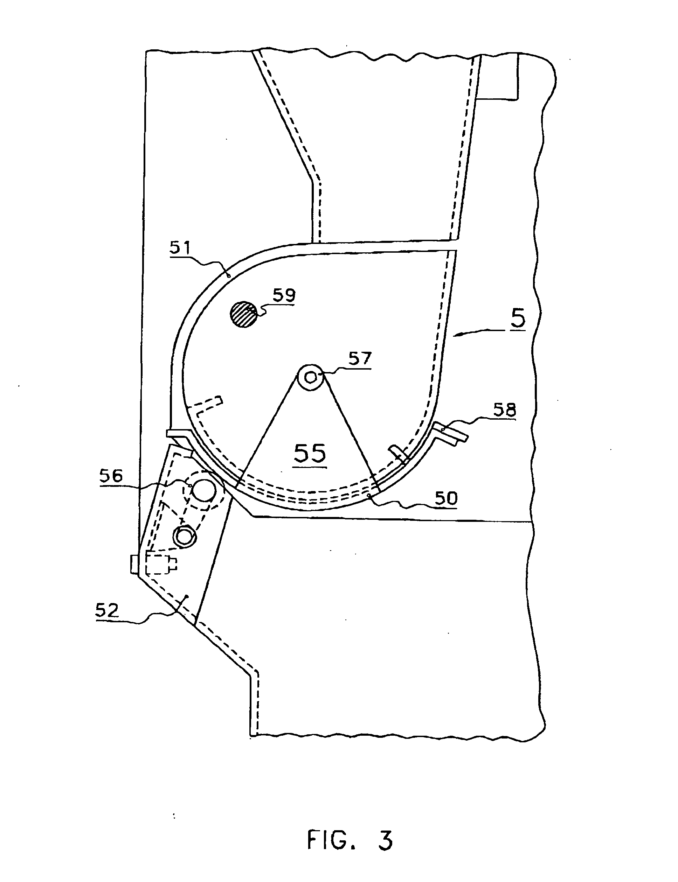

The third embodiment of a feed metering device according to the present invention, as shown in Figure 3, differs from that of Figure 2 by the position of the hinge pin 59 about which the feed unit 50 rotates. The hinge pin 59 is positioned close to the roll 56 for driving the feed unit 50 and measuring the torque, for measuring very small differences in the amount of feed. There is also provided a stop 58 for preventing superfluous movement of the feed unit 50. The dosing means 55 for closing the entrance opening 51 pivots about the axis 57.

Although the invention has been described on the basis of an animal identification device, provided with weighing and optionally with deterring means, which is fitted to the so-called stationary world, it is also possible to dispose the animal identification device and/or the weighing and/or deterring means on the movable feed unit.

## Claims

1. A feed metering device (3, 4, 5) for distributing fodder and/or drink in metered portions to an animal, which feed metering device (3, 4, 5) is provided with a feed unit (30, 40, 50) for containing fodder and/or drink, an entrance opening (31, 41, 51) to the feed unit (30, 40, 50), and a feed supplying device (33, 43) for supplying an amount of fodder and/or drink to the feed unit (30, 40, 50), said feed metering device (3, 4, 5) being provided with means for weighing the fodder and/or drink present in the feed unit (30, 40, 50), the feed unit (30, 40, 50) being pivotably and/or rotatably fastened to the feed metering device (3, 4, 5,) for the purpose of co-operating with the weighing means, **characterized in that** the means for weighing the fodder and/or drink present in the feed unit comprise:
a movable feed unit (30, 40, 50),
a motor (38, 48) for moving the feed unit (30, 40, 50),
a device (301, 401) for measuring the magnitude of the torque during movement and for deducing, from the magnitude of the torque measured, the weight of the fodder and/or drink present in the feed unit (30, 40, 50).

2. A feed metering device (3, 4, 5) as claimed in claim 1, **characterized in that** the motor (38, 48) for moving the feed unit (30, 40, 50) and the device (301, 401) for measuring the magnitude of the torque during movement and for deducing, from the magnitude of the torque measured, the weight of the fodder and/or drink present in the feed unit (30, 40, 50), are integrated in the animal identification device (32, 42, 52).

3. A feed metering device (3, 4, 5) as claimed in claim 1 or 2, **characterized in that** the motor (38, 48) for moving the feed unit (30, 40, 50) drives a torque roll (39, 47, 56), which torque roll (39, 47, 56) is in contact with the feed unit (30, 40, 50).

## Patentansprüche

1. Futterdosiervorrichtung (3, 4, 5) zum Ausgeben von Futter und/oder Trinkflüssigkeit in dosierten Portionen an ein Tier, wobei die Futterdosiervorrichtung (3, 4, 5) mit einem Futterbehälter (30, 40, 50) zur Aufnahme von Futter und/oder Trinkflüssigkeit, einer Eintrittsöffnung (31, 41, 51) zu dem Futterbehälter (30, 40, 50) und einer Futterzuführvorrichtung (33, 43) zum Zuführen einer Menge an Futter und/oder Trinkflüssigkeit zu dem Futterbehälter (30, 40, 50) versehen ist, wobei die Futterdosiervorrichtung (3, 4, 5) mit einer Vorrichtung zum Wiegen des in dem Futterbehälter (30, 40, 50) befindlichen Futters und/oder der Trinkflüssigkeit versehen ist, wobei der Futterbehälter (30, 40, 50) schwenkbar und/oder drehbar an der Futterdosiervorrichtung (3, 4, 5) angebracht ist, um mit der Wiegevorrichtung zusammenzuwirken,
**dadurch gekennzeichnet, daß** die Vorrichtung zum Wiegen des in dem Futterbehälter befindlichen Futters und/oder der Trinkflüssigkeit folgende Teile umfaßt:
einen beweglichen Futterbehälter (30, 40, 50),
einen Motor (38, 48) zum Bewegen des Futterbehälters (30, 40, 50),
eine Vorrichtung (301, 401), um die Größe des Drehmoments während der Bewegung zu messen und von der gemessenen Größe des Drehmoments das Gewicht des in dem Futterbehälter (30, 40, 50) befindlichen Futters und/oder der Trinkflüssigkeit abzuleiten.

2. Futterdosiervorrichtung (3, 4, 5) nach Anspruch 1,
**dadurch gekennzeichnet, daß** der Motor (38, 48) zum Bewegen des Futterbehälters (30, 40, 50) und die Vorrichtung (301, 401), um die Größe des Drehmoments während der Bewegung zu messen und von der gemessenen Größe des Drehmoments das Gewicht des in dem Futterbehälter (30, 40, 50) befindlichen Futters und/oder der Trinkflüssigkeit abzuleiten, in der Tieridentifikationsvorrichtung (32, 42, 52) angeordnet sind.

3. Futterdosiervorrichtung (3, 4, 5) nach Anspruch 1 oder 2,
**dadurch gekennzeichnet, daß** der Motor (38, 48) zum Bewegen des Futterbehälters (30, 40, 50) eine Drehmomentrolle (39, 47, 56) antreibt, wobei die Drehmomentrolle (39, 47, 56) in Kontakt mit dem Futterbehälter (30, 40, 50) steht.

## Revendications

1. Dispositif de dosage d'alimentation (3, 4, 5) destiné à distribuer du fourrage et/ou une boisson en portions dosées à un animal, lequel dispositif de dosage d'alimentation (3, 4, 5) est pourvu d'une unité d'alimentation (30, 40, 50) destinée à contenir du fourrage et/ou une boisson, d'une ouverture d'entrée (31, 41, 51) à l'unité d'alimentation (30, 40, 50), et d'un dispositif d'approvisionnement en alimentation (33, 43) destiné à approvisionner l'unité d'alimentation (30, 40, 50) en une quantité de fourrage et/ou de boisson, ledit dispositif de dosage d'alimentation (3, 4, 5) étant pourvu de moyens destinés à peser le fourrage et/ou la boisson présents dans l'unité d'alimentation (30, 40, 50), l'unité d'alimentation (30, 40, 50) étant fixée de façon pivotante et/ou rotative au dispositif de dosage d'alimentation (3, 4, 5) afin de coopérer avec les moyens de pesage, **caractérisé en ce que** les moyens de pesage du fourrage et/ou de la boisson présents dans l'unité d'alimentation comprennent :
une unité d'alimentation mobile (30, 40, 50),
un moteur (38, 48) destiné à déplacer l'unité d'alimentation (30, 40, 50),
un dispositif (301, 401) destiné à mesurer la magnitude du couple pendant un déplacement et à déduire, de la magnitude du couple mesurée, le poids du fourrage et/ou de la boisson présents dans l'unité d'alimentation (30, 40, 50).

2. Dispositif de dosage d'alimentation (3, 4, 5) selon la revendication 1, **caractérisé en ce que** le moteur (38, 48) destiné à déplacer l'unité d'alimentation (30, 40, 50) et le dispositif (301, 401) destiné à mesurer la magnitude du couple pendant le déplacement et à déduire, de la magnitude du couple mesurée, le poids du fourrage et/ou de la boisson présents dans l'unité d'alimentation (30, 40, 50), sont intégrés dans le dispositif d'identification de l'animal (32, 42, 52).

3. Dispositif de dosage d'alimentation (3, 4, 5) selon la revendication 1 ou 2, **caractérisé en ce que** le moteur (38, 48) destiné à déplacer l'unité d'alimentation (30, 40, 50) entraîne un rouleau de couple (39, 47, 56), lequel rouleau de couple est en contact avec l'unité d'alimentation (30, 40, 50).
